# EUROPEAN PATENT APPLICATION

(11) **EP 1 600 911 A1**
(43) Date of publication of application: **30.11.2005**
(21) Application number: 04076519.0
(22) Date of filing: 24.05.2004
(51) Int. Cl.: G09B 19/00, A63B 24/00

(54) **System, use of said system and method for monitoring and optimising a performance of at least one human operator**

(71) Applicant: Nederlandse Organisatie voor Toegepast-Natuurwetenschappelijk Onderzoek TNO, 2628 VK Delft (NL)
(72) Inventor: Kalisvaart, Sytze Hendrik, 5627 KW Eindhoven (NL); Lefeber, Frans Jan, 5212 BE 's Hertogenbosch (NL); Lombaers, Jakobus Henricus Maria, 5673 TT Neunen (NL); van Schie, Michael Petrus, 5621 GC Eindhoven (NL)
(74) Representative: Winckels, Johannes Hubertus F.

(57) **Abstract**

The invention relates to a system, for monitoring and optimising a performance of at least one human operator, comprising
- monitoring means (2) for collecting performance parameters, representative for the status of the performance;
- processing means (3) for assessing the operator's performance on the basis of said collected performance parameters and for providing the human operator with guiding instructions for improving said performance; and
- communication means (4) for communicating the guiding instructions to the human operator, wherein the performance parameters comprise at least one physiological parameter of the human operator, at least one interactive parameter, representative for any interaction between the human operator and his environment and preferably at least one contextual parameter regarding the human operator's direct environment.

## Description

The invention relates to a system for monitoring and optimising a performance of a human operator, said system comprising monitoring means for collecting parameters representative for the performance to be optimised, processing means for evaluating these parameters and on the basis thereof provide guiding instructions for the operator, to improve his performance, and communication means to communicate said guiding instructions to the operator. Such a system is known, for instance from US 6,652,284.

US 6,652,284 discloses a system for coaching sportsmen during a training session or game, comprising a central processing unit, arranged to collect and analyse parameters regarding the game and the players, for instance player statistics, game play information and player location information. The processing means are further arranged to develop, on the basis of said analysis, coaching instructions for the players, to improve their performance. To receive these instructions, each player is provided with wearable communication means, which may be integrated in a garment such as a helmet or glove and are arranged to provide the player with audible, visible or tactile feedback.

Thanks to this known system, each player may get personal instructions of the central processing unit, which acts as 'virtual coach'. This may enhance the effectiveness of the training and/or the overall performance of the team. Moreover, by presenting the collected parameters in a clear, structured way, a real coach may get a better overview of the play situation and consequently come to a better and/or faster decisions, for instance regarding the game tactics to be followed.

A disadvantage of this known system, however, is that it only takes into account statistic data of the players, collected from previous performances. As such the system will not exploit the player potentials to the fullest, which may result in some players being 'under loaded' and other players being 'overloaded' during a game or training session, which in turn may cause irritation or discontent for the under loaded players and injuries or underachievement for the overloaded players, and in any case will result in a less optimum performance than possible.

It is therefore an object of the invention to provide a system of the above-described type, in which the disadvantages of the known system are avoided, while maintaining the advantages thereof. To this end a system according to the present invention is characterised by the features of claim 1.

By measuring at least one physiological parameter representative of the human operator's condition and at least one interactive parameter representative for any interaction taking place between the operator and his environment, it is possible to obtain a more complete and more reliable overview of the momentary status of the performance and the available resources to accomplish said performance, which will enable a well-considered, more balanced and possibly more effective input of said resources, thereby achieving better results and prevent overloading or injuries or the like. Preferably, the system is further arranged to measure at least one contextual parameter, according to the features of claim 2, representative for the operator's direct environment. This allows the performance to be monitored in an even more complete way and moreover provides one extra parameter to influence said performance.

In further elaboration, the processing means may be provided with a performance specific algorithm, according to the features of claim 3, containing information regarding the performance to be optimised, as well as what parameters can be used to do so. The parameters most efficient in influencing the performance will be called the key parameters. These key parameters may differ per performance, application situation or operator, and therefore will have to be determined for every new situation, for example based on expert opinions (representatives of operators or other parties involved), by running some trial runs and/or by scientific studies on performances parameters. Once established, the key performance parameters and knowledge contained in the performance algorithm will help in gaining even better insight in the performance status and available options to control said performance, allowing more effective use of the available means.

Preferably, the monitoring means are arranged to be worn by the operator, according to the features of claim 4. To that end, these monitoring means, or at least the part thereof responsible for measuring the physiological parameter, may be incorporated in a garment, such as a shirt or helmet. Alternatively, said means may be enclosed in a housing, which can be clipped or otherwise attached to the operators cloths or body.

Similar considerations apply to the communication means. These too are preferably wearable by the human operator, according to the features of claim 5, and arranged to communicate by means of visible, audible and/or tactile indicators, such as a display, which may for instance be mounted in a helmet, or LED's, or a head set, or vibrating elements or means for applying little shocks to the body of the operator. Especially the latter, tactile means, have been proven to be quite effective thanks to the intuitive, fast response of the operators thereon.

Besides the data collected by the monitoring means, the processing means can be provided with additional data, to be taken into account when providing the guiding instructions, according to the features of claim 6. These additional data may for instance be inputted by the operator himself or a third party, such as a second operator or a coach, and may for instance relate to predetermined threshold values for specific performance parameters or to personal constraints or preferences of the operator. It allows the processing means to be updated with the latest developments, and to be optimised for a particular operator and/or performance.

In a particular advantageous embodiment, the monitoring means, processing means and communication means are arranged to operate real-time, according to the features of claim 7, so as to allow the operator or the system to intervene without much time delay, thereby giving the conditions little chance to alter in the mean time and rendering the intervention most effective.

In a further preferred embodiment, the system is preferably provided with memory means, according to the features of claim 8. These memory means may for instance be coupled to the monitoring means, allowing the collected data to be stored, and/or to the processing means, allowing the processed signals and guiding instructions to be stored. The stored data may be evaluated at a later time more thoroughly, thereby allowing for instance an operator to review his performance, or a coach to gain insight in tactics or processes underlying the performance. Also, these stored data may be used for training purposes, for instance to train new operators, and to study in more depth the influence of the various parameters on the performance, which knowledge may be used to validate or update the algorithms used in the processing means.

Of course, the processing means may be used with several monitoring means, of multiple operators, allowing their separate and combined contributions to be analysed, be it on their individual performance or their combined performance. Likewise, some of the communication means may be shared by several operators.

The invention furthermore relates to a communication means of a system according to the invention, having the form of a garment, provided with vibrating elements according to the features of claim 12. These vibrating means, which may for instance comprise piezoelectric elements or a little motor with an excenter, are arranged to act on specific parts of the body of a human operator wearing the garment and thereby direct said operator in a specific direction, associated with the particular body part. Surprisingly, applicant has found that such way of communicating to an operator gives very good results with fast reaction times, because the tactile means tap on the operator's intuition and make him respond intuitively in the appropriate way. It will be clear that said garment may furthermore be provided with the monitoring means, at least those for collecting the physiological data.

The invention furthermore relates to the use of the system according to the features of claim 13, and a method for monitoring and optimising a performance of at least one human operator, according to the features of claim 14.

Further advantageous embodiments of a system, communication means, use of the system and method according to the invention are set forth in the dependent claims.

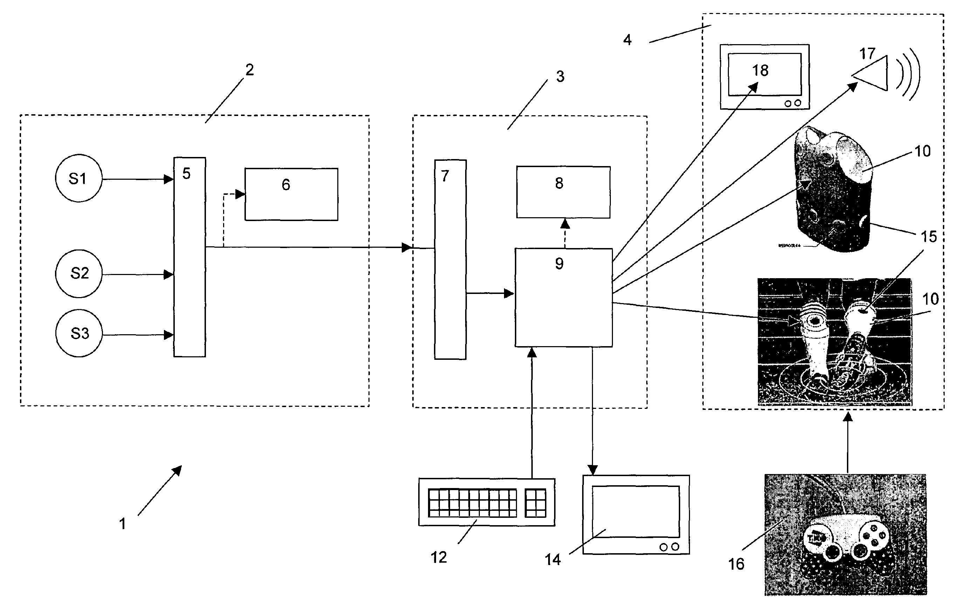

The invention will hereinafter be explained with reference to the single figure, showing a block diagram of a system 1 for monitoring and optimising the performance of an operator, comprising monitoring means 2, for monitoring and collecting certain key performance parameters, relevant to said performance, as to be discussed below, processing means 3, arranged to process these key performance parameters and on the basis thereof develop guiding instructions for the operator, and communication means 4 for communicating these guiding instructions to the operator.

The monitoring means 2 comprise first sensor means S1 to record physiological parameters, second sensor means S2 to record environmental parameters and third sensor means S3 to record interactive parameters. In this description the term 'physiological parameters' is reserved for all parameters which can be measured on or in the operator's body (including biomechanical parameters) and which are relevant for the contribution the operator can make to the performance, such as his heart rate or skin temperature. The term 'environmental parameter' is reserved for all parameters relating to the direct environment of the operator, such as the operator's position, ambient temperature, air quality or the like. The term 'interactive parameter' is reserved for all parameters representative for any interaction between the human operator and his environment, such as a pressure or force exerted by the operator on his environment, his equipment or a part thereof. Sensor means S1-S3 for measuring the respective parameters are well known in the art and will therefore need no further discussion herein.

The first sensor means S1 may be located on or in the body of the human operator. The second and third sensor means S2, S3 can likewise be located on the operator or alternatively be located at one or more strategically chosen locations in his direct environment. When the sensor means S1, S2, S3 are located on the operator, they may for instance be incorporated in a garment 10, such as a shirt, vest or socks. Alternatively the sensor means S1-S3 or at least part thereof can be housed in a personal monitoring unit, provided with suitable fastening means, such as a clip or Velcro, for attachment to an operator's body.

The monitoring means 2 further comprise transmitting means 5 for transmitting the recorded parameters to the processing means 3 and may further comprise memory means 6 for at least temporarily storing the recorded data. Depending on the location of the processing means 3 the transmitting means 5 can comprise electrical wiring. However, in a preferred embodiment, the transmitting means 5 are wireless, to offer the operator equipped with such monitoring means maximum freedom in his movements. The wireless transmitting means 5 may for instance make use of an RF transmitter.

The processing means 3 comprise receiving means 7 for receiving the measured data from the monitoring means 2 and may further comprise memory means 8, in addition to or instead of those already mentioned in relation to the monitoring means 2, for temporarily storing the received data. The processing means 3 are furthermore arranged to be programmed with a performance specific algorithm 9 containing quantitative and/or qualitative information regarding key performance parameters and their effect on the performance. In this description the term 'key performance parameters' is used for those parameters, which are of main influence on a specific performance. These key performance parameters may thus differ per performance to be optimised.

The processing means 3 in the illustrated embodiment further comprise input means 12, allowing any party to enter additional information in the processing means 3, for instance certain rules or constraints to be taken into account when formulating the guiding instructions. This additional information may be inputted before or during the performance, by the operator himself, possibly on request of the processing means 3, or by a third party such as a coach or a second operator.

The processing means 3 may further comprise output means 14, such as a display as illustrated in the single figure, for presenting the received and/or analysed parameters to any interested party, preferably in a structured, readily comprehensible way, so as to allow said party to gain a good overview of said parameters.

Like the monitoring means 2, the processing means 3 may be mounted on the human operator too, in a similar way as described for said monitoring means 2, thereby allowing in-situ feedback to the operator, to be described in more detail in the fourth application example given below. Alternatively or in addition to that, the processing means 3 can be located at a remote location of the operator.

The communication means 4 are meant to communicate any guiding instruction to the human operator, which guiding instructions may have been generated by the processing means 3 and/or a third party, using guiding means 16. The communication means 4 may to that end comprise audible means 17, such as an electronic voice or alarm, visible means 18, such as a display or LEDs and/or tactile means, such as vibrating means 15 or means for providing small electrical shocks. These communication means 4 too, may be arranged on or near the operator, and may for instance be incorporated in his garments 10, as illustrated. Alternatively, these communication means 4 may be shared by several human operators.

Before the system 1, as described above, can be used in any particular application (of which examples will be discussed below), a first crucial step is to identify the key performance parameters and their individual or combined influence on the performance to be optimised. Such parameters can for instance be found by interviewing the operator and or other parties involved in the performance. Alternatively, some trial runs can be made with the system 1, during which various parameters can be recorded and varied, so as to assess their influence on the performance. Once the key performance parameters have been established, their qualitative or quantitative effect on the performance can be laid down, for instance in a look-up table or a set of equations, together forming a model or algorithm 9. This table or algorithm 9 is subsequently implemented in the processing means 3, possibly together with certain limiting conditions, for instance personal constraints of specific operators, threshold values that are not to be exceeded or certain regulations that are to be complied with. Such additional information can also be entered in the processing means 3 at a later stage, via inputting means 12. Subsequently, the appropriate sensor means S1, S2, S3 may be selected, capable of measuring the identified key performance parameters, and mounted at appropriate locations. The system is then ready for operation.

The or each human operator may start performing his or their specific task, while the sensor means S1, S2, S3 record the selected key performance parameters. The measured parameters are transmitted to the processing means 3, where they are used together with the look-up table or algorithm 9 to monitor the progress of the performance. If the progress is not satisfactory, the processing means 3 may formulate, on the basis of said same algorithm, corrective actions to improve the performance. These corrective actions may be defined in the form of guiding instructions, to be communicated to the or each operator via the communication means 4. Additionally, the processing means 3 may present the received key parameters to a coach or other interested party, preferably in a structured form, so as to allow said coach to evaluate the performance, and formulate some corrective action, which may be entered into the processing means 3 via the input means 12, so as to be taken into account by the processing means 3 when formulating guiding instructions. In addition or alternatively, the coach may directly communicate his guiding instructions to the operator, via guiding means 16.

In a preferred embodiment the measured parameters, analysed results and/or guiding instructions are stored in the respective memory means 6, 8, allowing those data to be evaluated more elaborately at a later stage. Said data may moreover be used to validate and if necessary update the look up table or algorithm 9 determined earlier.

The system 1 as described can be used for various purposes and in various situations, involving one or more operators having to perform an individual or combined performance. It will be clear, that depending on such particular application the monitoring means 2, processing means 3 and communication means 4 may differ, as well as their respective locations. However, for every application it is an important aspect of the invention, that use is being made of at least physiological parameters and interactive parameters, and preferably contextual parameters, as defined before. The use of these two types of parameters allows the performance to be monitored and controlled accurately.

To further elucidate the invention, four examples will be given of possible applications of the system 1 according to the invention.

In a first example, the system 1 may be used to monitor the condition and/or recovery of a patient in for instance a hospital. In this example the key physiological parameter may for instance be identified as being the heart rate, EEG and/or temperature of the patient. The key interactive parameter may for instance be identified as being the intake of food and/or medication, for example expressed in chemical or biological substances, or the given treatment and/or exercises aimed at improving the patient's condition, for example expressed in forces exerted or duration. Optionally, the key contextual parameter may for instance be identified as being personal information regarding the patient, such as his age, blood type, gender, or information regarding his disease, such as the global recovery pattern associated therewith, providing a context against which the other parameters can be set off. All this information may be gathered in a central processing means 3, to which the monitoring devices 2 of one or more patients may be connected. This central processing means 3 may to that end be programmed with algorithms and/or characterising data for each specific patient and/or for each specific illness, and on the basis thereof analyse the acquired parameters. If these parameters show that the condition of the patient is not improving, correcting instructions may be given, either to the nursing staff, for instance to change the given medicine or dose thereof, or to the patient himself. Thanks to the system 1, the nursing staff may be relieved of some of their workload, while the patients may receive the individual care and feedback they need.

In a second example, the system 1 according to the invention may be applied in a sports environment, to monitor and improve the individual and/or team performance of sportsmen and to assist a coach in coaching the sportsmen during a training session or a real match. In this example the key physiological parameters could be a parameter representative for the physical momentary condition of the player, such as for instance his heart rate. The interactive parameters could for instance be the momentary score, the amount of time a player has control over the game object, such as a ball, the number of attacks and the percentage thereof resulting in points, the contact force with the ball, the direction of such contact force, the impact strength against other players, the distance run, etc. The contextual parameters, if used, could for instance be the position of the players and any change therein. In this example all players can be provided with first sensor means S1 for collecting the said physiological data, whereas the second and third sensor means S2, S3 for collecting the contextual and interactive data respectively, may be located at strategically chosen locations at the play field. The parameters measured by the sensor means S1-S3 are transmitted to the central processing means 3, which analysis and interprets the data and presents them to a coach, assisting him in making decisions regarding the play strategy, so as to improve the team's performance. Subsequently the coach and/or processing means 3 may formulate instructions for the players, which are then communicated to the players by the communication means 4, which in the given example may comprise audible or visible indicators, but preferably comprise tactile indicators, for instance in the form of a vest 10, equipped with vibrating elements 15 acting at different parts of the player's body, thereby directing him in a specific direction. As the player will almost respond instinctively on said vibrations, these communication means 4 form very effective and very fast means for directing the player. Thanks to the application of the system 1 according to the invention, the coach may be supported in his decisions and assisted in his coaching activities, while the players may get individual feedback. Moreover, the measured and recorded parameters may provide the players and coach with insight regarding the parameters which are most influential on the performance, thereby allowing more effective training and/or play strategies. Moreover, the stored data may be used to validate and/or update the algorithm 9 used by the processing means 3 to evaluate the performance.

According to a third application of the invention, the system 1 may be used to guide or navigate professional operators such as a pilot or firemen to perform a specific task. In this example, the key physiological parameter may again be a parameter representative for the professional's physical state, such as his heart rate and/or body temperature. The interactive data may for instance comprise information regarding contact heat flow between surface and fireman and/or a reaction force of his feet (which will differ when running or standing). The contextual parameter, if used, may for instance comprise information regarding the momentary position of the operator and ambient temperature.

In a fourth application of the invention, the system 1 may be used for in-situ coaching of a sportsmen, for instance to synchronise the paddle movements of a group of rowers, or to correct the movements or pose of a gymnast while performing some gymnastics exercise. In this case, the physiological parameters may involve the measurement of the pose, body position, or movement of the body or certain parts thereof, for instance by using optical or mechanical sensors, whereas the interactive parameters may measure the pressure or force exerted by the persons on the paddle, gymnastic tool, or the like equipment, or measure the reaction force received by the paddles from the water. These measured parameters can than be compared to an ideal pose, movement or force, which may be pre-programmed in the processing means 3, and in case of any deviation thereof provide the sportsmen with immediate feedback, for instance by means of the above-described vibrating elements 15 or auditive feedback, thereby allowing the sportsmen to immediately correct his pose or the like, which may enhance the learning experience. Such system could also be advantageously applied for revalidation and for people with for instance back problems, to help them correct their back shape while sitting, standing, walking etc.

In the case of the rowers or other situations where synchronised performance is required, the system 1 according to the invention can additionally be used to generate a feed forward signal, assisting such operators with their timing. For instance, a changing sound could be used so that the operators can anticipate on the right moment.

It is emphasised that in the above given examples, the identified key performance parameters may depend very much on the application in question and should therefore not be construed as limiting.

It is furthermore emphasised that the invention is not in any way limited to the embodiment and exemplary applications thereof, as presented in the description and accompanying figure. Many variations thereof are possible within the scope of the invention as outlined in the following claims.

## Claims

1. System for monitoring and optimising a performance of at least one human operator, comprising
- monitoring means (2) for collecting performance parameters, representative for the status of the performance;
- processing means (3) for assessing the operator's performance on the basis of said collected performance parameters and for providing guiding instructions for the at least one operator, to improve said performance; and
- communication means (4) for communicating the guiding instructions to the or each human operator, **characterised in that**,
the collected performance parameters comprise at least one physiological parameter of the human operator and at least one interactive parameter, representative for any interaction between the human operator and his environment.

2. System according to claim 1, wherein the collected performance parameters furthermore comprise at least one contextual parameter, representative for the human operator's environment.

3. System according to claim 1 or 2, wherein the processing means (3) are provided with a performance specific algorithm, containing information regarding the influence of the collected performance parameters on the performance in question.

4. System according to any one of the preceding claims, wherein the monitoring means (2) are arranged to be worn by the human operator during use, and provided with sensor means (S1), for measuring at least the physiological parameter.

5. System according to any one of the preceding claims, wherein the communication means (4) are arranged to be worn by the human operator and arranged to communicate said guiding instructions to the human operator by means of visible, audible and/or tactile indicators.

6. System according to any one of the preceding claims, wherein the processing means (3) comprise input means (12), allowing the human operator and/or a third party to provide the processing means (3) with additional data, to be taken into account when providing said guiding instructions.

7. System according to any one of the preceding claims, wherein the monitoring means (2), processing means (3) and communication means (4) are arranged to operate real-time.

8. System according to any one of the preceding claims, furthermore comprising memory means (6, 8), for at least temporarily storing at least part of the collected data and/or the guiding instructions.

9. System according to any one of the preceding claims, wherein at least part of the processing means (3) is arranged to be worn, during use, by the human operator, thereby allowing real time in-situ coaching by said system.

10. System according to any one of the preceding claims, wherein at least part of the processing means (3), during use, is located remote from the human operator, allowing remote coaching.

11. System according to any one of the preceding claims, wherein the processing means (3) are arranged to co-operate with a series of monitoring means (2) and communication means (4), to provide guiding instructions to a series of human operators, to improve their individual and/or combined performance.

12. Communication means of a system according to any one of the preceding claims, comprising a garment, in particular a shirt or vest, provided with vibrating elements, arranged to act on specific parts of the body of a human operator, when worn by said operator, thereby directing the operator in a specific direction associated with said particular body part and/or guiding the movement of said particular body part.

13. Use of the system according to any one of claims 1-11, for anyone of the following purposes: for monitoring and coaching individual and/or team players in a sports environment, for training, assisting and/or navigating professionals such as firemen, rescue teams or pilots in performing a specific task, for monitoring the health and/or recovery of patients.

14. Method for monitoring and optimising a performance of at least one human operator, comprising the steps of:
- identifying key physiological, interactive, and possibly contextual parameters, representative for the performance;
- formulating a performance algorithm, defining the influence of these key performance parameters on the performance;
- measuring said identified key performance parameters during the performance and evaluate the status of the performance using said performance algorithm;
- providing guiding instructions on the outcome of said evaluation, so as to improve the performance; and
- communicate these instructions to the respective operators.
